# FASCICULE DE BREVET EUROPEEN

(11) **EP 3 870 460 B1**
(45) Date de publication et mention de la délivrance du brevet: **07.12.2022**
(21) Numéro de dépôt: 19809535.8
(22) Date de dépôt: 17.10.2019
(51) Int. Cl.: B60C 9/00, B60C 9/18, B60C 9/20, B60C 9/22

(54) **PNEUMATIQUE COMPRENANT DES ELEMENTS DE RENFORT SOUS FORME DE BANDELETTES STRATIFIEES**
REIFEN MIT VERSTÄRKUNGSELEMENTEN IN FORM VON LAMINIERTEN STREIFEN
TYRE COMPRISING REINFORCING ELEMENTS IN THE FORM OF LAMINATED STRIPS

(30) Priorité: 22.10.2018 FR 1859731
(43) Date de publication de la demande: 01.09.2021
(73) Titulaire: COMPAGNIE GENERALE DES ETABLISSEMENTS MICHELIN, 63000 Clermont-Ferrand (FR)
(72) Inventeur: PATAUT, Gaël, 63040 CLERMONT-FERRAND CEDEX 9 (FR)
(74) Mandataire: Louret, Sylvain
(86) Numéro de dépôt international: PCT/FR2019/052465
(87) Numéro de publication internationale: WO 2020/084227

(56) Documents cités:
- WO-A1-01/45966
- WO-A1-2018/234989
- WO-A1-2019/077289
- WO-A1-2019/077290
- FR-A1- 3 020 369
- JP-A- H1 120 406
- JP-A- H09 109 611
- JP-A- 2003 094 908

## Description

La présente invention concerne des éléments de renfort de pneumatique. Elle concerne plus particulièrement des éléments architecturaux de sommet de pneumatique.

Les pneumatiques à carcasse radiale, couramment appelés «pneumatiques radiaux », se sont progressivement imposés sur la plupart des marchés et en particulier sur le marché des pneumatiques pour véhicules de tourisme. Ce succès est dû en particulier aux qualités d'endurance, de confort, de légèreté et de faible résistance au roulement de la technologie radiale.

Le pneumatique radial est essentiellement constitué de flancs souples et d'un sommet plus rigide, les flancs s'étendant radialement des bourrelets jusqu'aux épaules délimitant le sommet, le sommet supportant la bande de roulement du pneumatique. Chacune de ces parties du pneumatique ayant des fonctions propres, leur armature est également spécifique. Une caractéristique de la technologie radiale est qu'elle permet d'adapter précisément l'armature de chacune de ces parties de manière relativement indépendante.

Un pneumatique radial de tourisme comprend de manière connue une armature de carcasse radiale formée de renforts (généralement textiles) reliant les deux bourrelets du pneumatique, et une armature de sommet comprenant :

-deux couches (ou nappes) croisées de triangulation de sommet consistant essentiellement en des renforts (généralement métalliques) formant chacune un angle d'environ 30 degrés avec la direction circonférentielle du pneumatique ;

-une ceinture de sommet consistant essentiellement en des renforts pratiquement parallèles à la direction circonférentielle du pneumatique, appelés souvent renforts à 0 degré même s'ils forment en général un angle non nul avec la direction circonférentielle, par exemple un angle allant de 0 à 10 degrés.

En schématisant, la carcasse a pour fonction première de contenir la pression interne du pneumatique, les nappes croisées ont pour fonction première de donner au pneumatique sa rigidité de dérive et la ceinture de sommet a pour fonction première de résister à la centrifugation de sommet à haute vitesse. En outre, la coopération de tous ces éléments d'armature crée ce que l'on appelle la « triangulation du sommet ». C'est cette triangulation qui procure au pneumatique sa capacité à maintenir une forme relativement cylindrique face aux diverses sollicitations.

Chacun de ces éléments de l'armature de sommet est généralement associé par calandrage à des mélanges élastomères. L'empilement de ces éléments est alors rendu solidaire au cours de la vulcanisation du pneumatique.

Après plusieurs décennies de recherche, de progrès et d'optimisation de l'architecture des pneumatiques radiaux, c'est la combinaison de tous ces éléments d'armature (carcasse, couches croisées, ceinture) qui permet au pneumatique radial d'atteindre les indéniables performances de confort, de longévité et de coût de revient qui font son succès. Tout au long de ce développement, on a cherché à améliorer les performances des pneumatiques, par exemple du point de vue de leur masse et de leur résistance au roulement. C'est ainsi que le sommet du pneumatique radial a vu progressivement son épaisseur diminuer par l'adoption de renforts de plus en plus performants et de calandrages de plus en plus minces de manière à fabriquer les pneumatiques les plus légers possibles, présentant une moindre résistance au roulement.

Le document WO2010115860 décrit un pneumatique pour véhicule de tourisme dans lequel l'armature de sommet est constituée de trois éléments distincts et séparés : une armature de carcasse radiale composée de renforts reliant les deux talons du pneumatique, une ceinture de sommet constituée essentiellement d'éléments de renfort parallèles à la direction circonférentielle du pneumatique, et une couche de sommet de triangulation constituée essentiellement d'éléments de renfort formant un angle par rapport à la circonférence du pneumatique. Une telle architecture présente de nombreux avantages du point de vue des performances du pneumatique, mais implique un procédé de fabrication complexe, avec de nombreuses étapes. Enfin, le nombre de sous-couches présentes limite les gains potentiels en termes de masse.

Le document EP 0101400 décrit un pneumatique radial ayant une pluralité de bandes annulaires semi-rigides disposées dans une portion de couronne du pneumatique. Les bandes sont disposées sensiblement sur toute la largeur de la bande de roulement du pneumatique. Selon un mode de réalisation particulier, la bande de roulement comprend une structure de renforcement avec une bande centrale et deux bandes latérales. Les bandes relativement larges, indépendantes les unes des autres, comportent chacune des renforts fibreux incorporés dans une matrice de résine époxy, formant une structure en arceaux semi-rigides. On retrouve ainsi une grande complexité de réalisation. Le document JPH09109611 décrit un pneumatique comprenant une ceinture construite en trancanant un ruban formé d'une structure à deux couches, le ruban formant un angle faible avec la direction circonférentielle.

Pour pallier ces différents inconvénients, notamment la complexité de réalisation, le document WO2017/013575 décrit un pneumatique pour véhicule de tourisme comprenant une zone de renfort de sommet comportant deux couches superposées radialement, chaque couche étant constituée par des bandelettes composites enrobées d'une composition élastomère disposées de manière juxtaposées et avec un angle d'environ 0° par rapport à la direction circonférentielle, qui peuvent intégrer un film thermoplastique.

Cependant il existe toujours un besoin d'optimiser encore les performances en termes de rigidité d'extension et rigidité en cisaillement, de réduire les émissions de bruit d'un pneumatique tout en minimisant la masse de la zone de renfort de sommet des pneumatiques.

La demanderesse en poursuivant ses recherches a découvert qu'une nouvelle architecture de zone de renfort de pneumatique permettait tout en continuant à pallier les inconvénients connus des architectures classiques, à améliorer les performances en extension et en cisaillement de cette zone de renfort tout en réduisant le bruit généré par le pneumatique en facilitant le procédé de fabrication du pneumatique autant que faire se peut et en maintenant, voire en améliorant la fonction de frettage du pneumatique.

A cet effet, l'invention a pour objet un pneumatique comprenant une nappe de carcasse reliant deux bourrelets par l'intermédiaire de deux flancs, ladite nappe de carcasse étant surmontée radialement vers l'extérieur du pneumatique par une zone de renfort de sommet et elle-même surmontée radialement vers l'extérieur du pneumatique par une bande de roulement, la zone de renfort de sommet comprenant une pluralité de bandelettes de renfort disposées sur au moins une nappe de bandelette, lesdites bandelettes de chaque nappe de bandelettes étant disposées de manière juxtaposées axialement et formant chacune un angle inférieur ou égal à 10° avec la direction circonférentielle, caractérisé en ce que chaque bandelette de renfort est constituée par un stratifié constitué par :
- n≥1 couche(s) composite(s) intérieure(s), et dans le cas où n>1 ces couches composites intérieures étant juxtaposées radialement les unes aux autres, chaque couche composite intérieure comprenant des fibres orientées parallèles entre elles dont l'angle avec la direction circonférentielle est, en valeur absolue, inférieur ou égal à 10°, les fibres orientées de chaque couche composite intérieure présentant un module en extension inférieur ou égal à 30 GPa et étant enrobées d'une matrice polymérique, la ou les couches composites intérieures étant encadrées radialement de part et d'autre respectivement par m≥1 couches composites extérieures, et dans le cas où m>1 ces m couches composites extérieures étant, de chaque côté de la ou des couches composites intérieures, juxtaposées radialement les unes aux autres,
- chaque couche composite extérieure comprenant des fibres orientées parallèles entre elles dont l'angle avec la direction circonférentielle est, en valeur absolue, strictement supérieur à 10°, les fibres orientées de chaque couche composite extérieure présentant un module en extension supérieur ou égal à 55 GPa et étant enrobées d'une matrice polymérique.

Par pneumatique, on entend un bandage qui, une fois monté sur un support de montage, par exemple une jante, délimite une cavité fermée, cette cavité étant pressurisable par un gaz.

Dans la présente demande, sauf indication expresse différente, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le signe positif ou négatif d'un angle est défini par son orientation, c'est-à-dire le sens, horaire ou anti-horaire, dans lequel il faut tourner à partir d'une droite de référence, ici la direction circonférentielle du pneumatique, définissant l'angle pour atteindre l'autre droite définissant l'angle. Par exemple, on peut prendre comme convention qu'un angle orienté dans le sens anti-horaire à partir de la droite de référence, ici la direction circonférentielle, est de signe positif et qu'un angle orienté dans le sens horaire à partir de la droite de référence, ici la direction circonférentielle, est de signe négatif. On pourrait également prendre la convention inverse.

La nappe de carcasse du pneumatique selon l'invention comprend préférentiellement des éléments filaires de renfort de carcasse s'étendent axialement entre chaque bourrelet du pneumatique en passant dans chaque flanc et sous le sommet du pneumatique. De préférence, chaque élément filaire de renfort de carcasse s'étend selon une direction faisant un angle supérieur ou égal à 65°, de préférence supérieur ou égal à 80° et plus préférentiellement sensiblement égal à 90° avec la direction circonférentielle du pneumatique.

Conformément à l'invention, chaque bandelette forme un angle inférieur ou égal à 10° avec la direction circonférentielle du pneumatique. En effet, chaque bandelette, de par sa forme, s'étend selon une direction principale selon sa plus grande longueur et cette direction principale de la bandelette forme un angle inférieur ou égal à 10° avec la direction circonférentielle du pneumatique.

Conformément à l'invention, la ou les couches composites intérieures permettent d'assurer la fonction de frettage du pneumatique en reprenant les efforts longitudinaux et donc d'éviter l'utilisation d'une nappe de frettage classique comprenant des éléments de renfort filaires agencés sensiblement parallèlement les uns aux autres et faisant un angle inférieur ou égal à 10° avec la direction circonférentielle du pneumatique et noyés dans une matrice de composition de caoutchouc. Mais surtout, afin de permettre des déformations radiale et circonférentielle aisées du pneumatique lors de son procédé de fabrication, les fibres orientées de cette ou ces couches composites intérieures présentent un module relativement bas, ce qui permet une déformation aisée sous faible contrainte de la zone de renfort de sommet lors du procédé de fabrication du pneumatique même si l'angle des fibres orientées de la ou des couches composites intérieures est relativement faible.

Conformément à l'invention, les couches composites extérieures permettent, de par l'utilisation de fibres orientées à haut module et de l'angle de ces fibres orientées à haut module, d'améliorer les performances en extension et en cisaillement de la zone de renfort de sommet.

Enfin, toujours conformément à l'invention, les inventeurs à l'origine de l'invention émettent a posteriori l'hypothèse que le bruit généré par le pneumatique dépend essentiellement des coefficients transversaux et longitudinaux de Poisson de chaque stratifié et que plus ces coefficients de Poisson sont élevés, moins le bruit généré par le pneumatique est important. Les inventeurs ont ainsi découvert qu'en mettant des fibres orientées à bas module selon un angle relativement faible, ici inférieur ou égal à 10°, les coefficients de Poisson de chaque stratifié étaient, toutes choses étant égales par ailleurs, relativement élevés.

Dans un premier mode de réalisation, les fibres orientées sont constituées par des filés (appelés en anglais « roving ») unitaires parallèles entre eux. Dans ce mode de réalisation, chaque couche composite est constituée par les fibres orientées enrobées de la matrice polymérique.

Dans un deuxième mode de réalisation, les fibres orientées sont constituées par des éléments filaires d'un tissu comprenant des premiers éléments filaires sensiblement parallèles entre eux et des deuxièmes éléments filaires sensiblement parallèles entre eux s'entrecroisant avec les premiers éléments filaires, les fibres orientées étant soit les premiers éléments filaires soit les deuxièmes éléments filaires. Ce deuxième mode de réalisation permet ainsi de réaliser une seule couche composite comprenant des premières et deuxièmes fibres orientées appartenant à un même tissu là où le premier mode de réalisation aurait nécessité deux couches composites comprenant chacune des fibres orientées.

Dans un mode de réalisation préférentiel, le pneumatique comprenant un sommet surmontant radialement vers l'extérieur du pneumatique la nappe de carcasse et comprenant la bande de roulement et la zone de renfort de sommet, le sommet est, à l'exception de la zone de renfort de sommet, dépourvu de toute nappe renforcée par des éléments de renfort filaires agencés sensiblement parallèlement les uns aux autres et noyés dans une matrice de composition de caoutchouc. Les éléments de renfort filaires de telles nappes renforcées exclues du sommet du pneumatique comprennent les éléments de renfort filaires métalliques et les éléments de renfort filaires textiles.

Dans un mode de réalisation très préférentiel, le pneumatique comprenant un sommet surmontant radialement vers l'extérieur du pneumatique la nappe de carcasse, le sommet est constitué par la zone de renfort de sommet et la bande de roulement.

Dans un mode de réalisation encore plus préférentiel, la zone de renfort de sommet est, à l'exception de la ou des nappes de bandelettes noyées dans la matrice de composition de caoutchouc, dépourvue de toute nappe renforcée par des éléments de renfort filaires agencés sensiblement parallèlement les uns aux autres et noyés dans une matrice de composition de caoutchouc. Les éléments de renfort filaires de telles nappes renforcées exclues de la zone de renfort de sommet comprennent les éléments de renfort filaires métalliques et les éléments de renfort filaires textiles.

Dans le mode de réalisation le plus préférentiel, la zone de renfort de sommet est constituée par la ou les nappes de bandelettes noyées dans la matrice de composition de caoutchouc.

En outre, de façon très avantageuse, le pneumatique est, radialement entre la nappe de carcasse et le sommet, dépourvu de toute nappe renforcée par des éléments de renfort filaires agencés sensiblement parallèlement les uns aux autres et noyés dans une matrice de composition de caoutchouc. Les éléments de renfort filaires de telles nappes renforcées exclues d'entre la nappe de carcasse et le sommet comprennent les éléments de renfort filaires métalliques et les éléments de renfort filaires textiles.

Dans un mode de réalisation préférentiel permettant d'améliorer les propriétés mécaniques du pneumatique, le pneumatique comprend au moins deux nappes de bandelettes, une première nappe de bandelettes radialement à l'intérieur et une deuxième nappe de bandelettes radialement à l'extérieur, lesdites bandelettes de chaque première et deuxième nappe de bandelettes étant disposées de manière juxtaposées axialement et formant chacune un angle inférieur ou égal à 10° avec la direction circonférentielle.

Toujours dans un mode de réalisation permettant d'améliorer les propriétés mécaniques du pneumatique, le recouvrement moyen entre les bandelettes des première et deuxième nappes de bandelettes est supérieur ou égal à 20%, de préférence à 40%. Le recouvrement moyen entre des première et deuxième nappes de bandelettes est la moyenne des recouvrements unitaires des bandelettes de la première nappe par les bandelettes de la deuxième nappe. Le recouvrement unitaire entre une bandelette de la première nappe et une ou plusieurs bandelettes de la deuxième nappe est le rapport en pourcent :
- de la largeur axiale de la projection radiale de la bandelette de la première nappe sur la ou les bandelettes de la deuxième nappe,
   sur
- la largeur axiale de la bandelette de la première nappe.

Le pourcentage de recouvrement peut varier selon les modes de réalisation. Ce recouvrement forme un couplage entre les nappes de bandelettes générant une cohésion de l'ensemble de la zone de renfort du sommet. Ce couplage permet en particulier une transmission d'efforts de cisaillement entre les nappes de bandelettes. On ne tient pas compte dans la valeur de ce recouvrement moyen de la présence de la matrice de composition de caoutchouc.

Selon une autre variante de réalisation préférée de l'invention, le recouvrement moyen entre les bandelettes des première et deuxième nappes de bandelettes est inférieur ou égal à 80%, de préférence à 60%. Ainsi, on s'assure de la présence d'un pont de gomme d'une largeur axiale assurant un découplage entre deux bandelettes axialement juxtaposées.

Dans une variante dans laquelle le pneumatique comprend au moins trois nappes de bandelettes, le recouvrement moyen entre les bandelettes de chaque nappe de bandelettes recouvrant les bandelettes de la nappe de bandelettes qui lui est radialement intérieure est supérieur ou égal à 20%, de préférence à 40% et inférieur ou égal à 80%, de préférence à 60%.

De préférence, chaque bandelette de chaque nappe de bandelettes forme un angle inférieur ou égal à 5° avec la direction circonférentielle et très préférentiellement sensiblement nul avec la direction circonférentielle.

Très avantageusement, chaque nappe de bandelettes est noyée dans une matrice de composition de caoutchouc qui présente, à l'état réticulé, un module sécant en extension à 10% d'allongement supérieur ou égal à 10 MPa. Dans un mode de réalisation où l'on souhaite maximiser la réduction du bruit le module sécant en extension à 10% d'allongement est de préférence inférieur ou égal à 30 MPa et plus préférentiellement inférieur ou égal à 20 MPa.

On mesure en seconde élongation (i.e., après un cycle d'accommodation au taux d'extension prévu pour la mesure elle-même). Ces essais de traction permettent de déterminer les contraintes d'élasticité et les propriétés à la rupture. Ils sont effectués conformément à la norme française NF T 46-002 de septembre 1988. On mesure en seconde élongation (i.e., après un cycle d'accommodation au taux d'extension prévu pour la mesure elle-même) les modules sécants nominaux en extension (ou contrainte apparente, en MPa) à 10% d'allongement (notés MA 10) à 23°C ± 2°C, et dans les conditions normales d'hygrométrie.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

On notera que les composés mentionnés ci-dessous et entrant dans la préparation de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

La matrice de composition de caoutchouc est à base d'au moins un élastomère, diénique ou non diénique (par exemple thermoplastique) ; il s'agit de préférence d'une composition du type réticulée ou réticulable c'est-à-dire qu'elle comprend alors un système de réticulation (notamment un système de vulcanisation) adapté pour permettre la réticulation (durcissement) de la composition lors de sa cuisson (ou cuisson de l'article en caoutchouc tel que pneumatique intégrant une zone de sommet conforme à l'invention).

De préférence, l'élastomère est un élastomère diénique. De manière connue, les élastomères diéniques peuvent être classés dans deux catégories : "essentiellement insaturés" ou "essentiellement saturés". On entend par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%. Bien qu'elle soit applicable à tout type d'élastomère diénique, la présente invention est préférentiellement mise en oeuvre avec un élastomère diénique du type fortement insaturé.

Cet élastomère diénique est plus préférentiellement choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs connus de l'homme de l'art et habituellement utilisés dans les compositions de caoutchouc destinées à la fabrication de pneumatiques, tels que par exemple des charges renforçantes comme le noir de carbone ou la silice, des agents de couplage, des charges non-renforçantes, des plastifiants (huiles plastifiantes et/ou résines plastifiantes), des pigments, des agents de protection tels que cires anti-ozone, anti-ozonants chimiques, antioxydants, des agents anti-fatigue, des résines renforçantes (telles que décrites par exemple dans la demande WO 02/10269), un système de réticulation, par exemple à base de soufre et autres agents de vulcanisation, et/ou de peroxyde et/ou de bismaléimide.

L'homme de l'art saura, à la lumière de la présente description, ajuster la formulation de la composition de caoutchouc afin d'atteindre les niveaux de propriétés (notamment module MA10) souhaités, et adapter la formulation à l'application spécifique envisagée.

Il est bien connu d'augmenter la rigidité des compositions de caoutchouc en augmentant par exemple leur taux de charge renforçante, le taux de soufre et autres agents de vulcanisation, ou encore en introduisant des résines renforçantes, toutes ces solutions pouvant être cumulées pour l'obtention des plus hautes rigidités.

De façon très préférée, l'angle formé par les fibres orientées de chaque couche composite intérieure avec la direction circonférentielle est, en valeur absolue, inférieur ou égal à 5°, de préférence sensiblement nul.

De façon très préférée, l'angle formé par les fibres orientées de chaque couche composite extérieure avec la direction circonférentielle va, en valeur absolue de 30° à 60°. Des angles trop petits, c'est-à-dire qui en valeur absolue sont inférieurs à 30°, confèrent une rigidité longitudinale relativement élevée à chaque stratifié et donc un coefficient de Poisson longitudinal relativement faible et donc nuisent à la réduction du bruit généré par le pneumatique. De façon analogue, des angles trop grands, c'est-à-dire qui en valeur absolue sont supérieurs à 60°, confèrent une rigidité transversale relativement élevée à chaque stratifié et donc un coefficient de Poisson transversal relativement faible et donc nuisent à la réduction du bruit généré par le pneumatique.

Avantageusement, n va de 1 à 20, de préférence de 1 à 12 et plus préférentiellement de 1 à 6. Avantageusement, m va de 1 à 8, de préférence de 1 à 4 et plus préférentiellement m=1 ou 2. De telles valeurs de n et m permettent d'une part d'assurer des propriétés de résistance mécanique élevées et d'autre part d'alléger la zone de renfort de sommet par rapport à un pneumatique classique.

Dans un mode de réalisation permettant d'obtenir un stratifié présentant une structure équilibrée, la somme des angles formés avec la direction circonférentielle par les fibres orientées de toutes les couches composites extérieures disposées radialement d'un même côté de la ou des couches composites intérieures de chaque stratifié est égale en valeur absolue à la somme des angles formés avec la direction circonférentielle par les fibres orientées de toutes les couches composites extérieures disposées radialement de l'autre côté du plan médian dudit stratifié. Le plan médian du stratifié est le plan parallèle à la direction principale du stratifié et situé à équidistance des faces radialement interne et externe du stratifié. De préférence, la somme des angles formés avec la direction circonférentielle par les fibres orientées de toutes les couches composites extérieures disposées radialement d'un même côté de la ou des couches composites intérieures de chaque stratifié est égale en valeur à la somme des angles formés avec la direction circonférentielle par les fibres orientées de toutes les couches composites extérieures disposées radialement de l'autre côté du plan médian dudit stratifié. Dans cette variante, on minimise le risque de gauchissement du stratifié.

Dans un mode de réalisation encore plus préférentiel n'induisant pas d'orientation du renforcement dans le pneumatique, la somme des angles formés avec la direction circonférentielle par les fibres orientées des couches composites extérieures de chaque stratifié est égale à 0°.

Dans un mode de réalisation, l'angle des fibres orientées de deux couches composites extérieures disposées symétriquement de chaque côté de la ou des couches composites intérieures est identique. Dans un tel mode de réalisation, dit symétrique, permet d'utiliser chaque stratifié indépendamment de son sens de pose dans le pneumatique.

Dans un autre mode de réalisation, l'angle des fibres orientées de deux couches composites extérieures disposées symétriquement de chaque côté de la ou des couches composites intérieures est identique en valeur absolue mais de signe opposé.

Très avantageusement et de façon à maximiser la réduction du bruit généré par le pneumatique et les propriétés mécaniques de chaque stratifié, la valeur absolue du rapport de chaque angle formé par les fibres orientées d'une couche composite extérieure de chaque stratifié sur l'angle formé par les fibres orientées de chaque autre couche composite extérieure dudit stratifié va de 0,8 à 1,2, de préférence de 0,9 à 1,1 et plus préférentiellement est égal à 1. En effet, la présence d'une couche composite dont les fibres orientées présentent un angle significativement différent des angles des fibres orientées des autres couches composites peut entraîner une réduction du gain en bruit mais également réduire les propriétés mécaniques de chaque stratifié en raison de l'hétérogénéité que cette couche composite crée dans le stratifié.

Avantageusement, la matrice polymérique de chaque couche composite de stratifié comprend un polymère thermodurcissable ou un polymère thermoplastique.

Conformément à l'invention, les fibres orientées de chaque couche composite extérieure comprennent des fibres orientées présentant un haut module. On entendra dans la présente demande, par bas module, un module en extension (module d'Young) supérieur ou égal à 55 GPa. Un tel module en extension est mesuré conformément à la norme ASTM D4848-98(2012).

Avantageusement, les fibres orientées de chaque couche composite extérieure sont choisies parmi les fibres de verre, les fibres de carbone, les fibres de polyamide aromatique ou copolyamide aromatique, les fibres de basalte, les fibres de quartz et les mélanges de ces fibres.

Dans un mode de réalisation, les fibres orientées de chaque couche composite extérieure de stratifié comprennent des fibres de verre et de préférence, les fibres de chaque couche composite de stratifié comprennent majoritairement des fibres de verre. Dans ce mode de réalisation, le ratio volumique matrice polymérique/fibres orientées de chaque couche composite va de 30/70 à 80/20.

Dans un autre mode de réalisation, les fibres orientées de chaque couche composite de stratifié comprennent des fibres de carbone et de préférence les fibres de chaque couche composite de stratifié comprennent majoritairement des fibres de carbone. Dans ce mode de réalisation, le ratio volumique matrice polymérique/fibres orientées de chaque couche composite extérieure va de 30/70 à 90/10.

Conformément à l'invention, les fibres de chaque couche composite intérieure comprennent des fibres orientées présentant un bas module. On entendra dans la présente demande, par bas module, un module en extension (module d'Young) inférieur ou égal à 30 GPa, de préférence allant de 6 GPa à 30 GPa. Un tel module en extension est mesuré conformément à la norme ASTM D4848-98(2012).

Avantageusement, les fibres orientées de chaque couche composite intérieure sont choisies parmi les fibres de polyester, les fibres de cellulose, les fibres de polyamide aliphatique et les mélanges de ces fibres.

Selon une variante de réalisation préférée de l'invention, les fibres orientées à bas module de chaque couche composite intérieure comprennent des fibres orientées en polyéthylène téréphtalate. De façon préférentielle, les fibres orientées en polyéthylène téréphtalate sont majoritaires, c'est-à-dire représentent plus de 50 % des fibres orientées d'une même couche composite intérieure. Plus préférentiellement encore, les fibres orientées de chaque couche composite intérieure sont constituées par des fibres en polyéthylène téréphtalate.

Selon d'autres variantes de réalisation préférées de l'invention, les fibres orientées de chaque couche composite intérieure comprennent des fibres en polyamide aliphatique (comme le PA66, PA46, PA6, PA10 semi-aromatique), des fibres en cellulose ou rayonne ou encore des fibres thermoplastiques de bas module. Chacun de ces types de de fibres orientées pouvant être utilisées préférentiellement en étant majoritaire, c'est-à-dire représentant plus de 50 % des fibres orientées d'une même couche composite intérieure, et encore plus préférentiellement, chacun de ces types de fibres orientées constituant la totalité des fibres orientées de chaque couche composite intérieure.

Avantageusement, le ratio volumique matrice polymérique/fibres orientées de chaque couche composite intérieure va de 25/75 à 55/45.

L'invention sera mieux comprise à la lecture de la description qui va suivre, donnée uniquement à titre d'exemple non limitatif et faite en se référant aux dessins dans lesquels:
- la figure 1 est une représentation schématique en perspective d'un pneumatique selon l'art antérieur ;
- la figure 2 est une vue en coupe d'un pneumatique selon l'invention ;
- la figure 3A est une représentation schématique d'une zone de renfort de sommet du pneumatique selon l'invention de la figure 2;

- la figure 3B est une représentation schématique d'une zone de renfort selon un deuxième mode de réalisation de l'invention; et
- la figure 4 est une vue éclatée d'une bandelette de la zone de renfort de sommet de la figure 3A.

Dans les figures, on a représenté un repère X, Y, Z correspondant aux orientations habituelles respectivement axiale (selon la direction Y), radiale (selon la direction Z) et circonférentielle (selon la direction X) d'un pneumatique.

Par « direction longitudinale » ou « direction circonférentielle », on entend une direction qui correspond à la périphérie du pneumatique et qui est définie par la direction de roulement du pneumatique.

Par « direction axiale », on entend une direction parallèle à l'axe de roulement du pneumatique.

Par « bande de roulement » d'un pneumatique, on entend une quantité de mélange élastomère délimitée par des surfaces latérales et par deux surfaces principales dont l'une est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « bourrelet » d'un pneumatique, on entend une partie du pneumatique destinée à prendre assise sur une jante de roue.

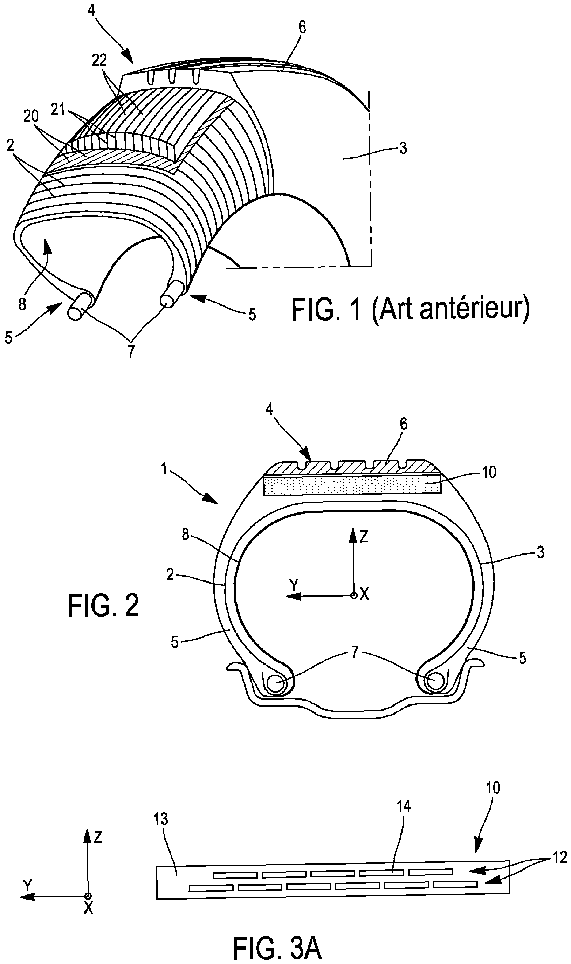

La figure 1 illustre une vue en perspective d'un pneumatique partiellement découpé couche par couche, pour véhicule de tourisme classique selon l'état de la technique. Une armature de carcasse 2 reliée aux bourrelets 5 autour de tringles 7 s'étend le long des flancs 3 et du sommet 4. L'armature de carcasse 2 est formée de renforts orientés radialement. Les renforts sont des câbles textiles (par exemple en nylon, rayonne, polyester). Au niveau du sommet du pneumatique, la carcasse est surmontée de deux couches croisées 20, 21 de triangulation, et d'une ceinture 22. Les deux couches croisées 20, 21 de triangulation de sommet comportent des renforts orientés selon un angle compris sensiblement entre 20 et 40 degrés de part et d'autre de la direction circonférentielle du pneumatique. Des câbles métalliques constituent les renforts des couches croisées 20, 21. Une couche 8 de mélange élastomère d'étanchéité recouvre la cavité interne du pneumatique. Une bande de roulement 6 surmonte l'ensemble. Cette architecture implique plusieurs couches de semi-finis, requérant un procédé de fabrication avec de nombreuses étapes intermédiaires. Les nombreuses couches rendent le pneumatique relativement lourd.

La figure 2 représente un pneumatique 1 selon l'invention comprenant une nappe de carcasse 2 reliant deux bourrelets 5 par l'intermédiaire de deux flancs 3. La nappe de carcasse 2 étant surmontée radialement vers l'extérieur du pneumatique par un sommet 4 comprenant une zone de renfort de sommet 10 et elle-même surmontée radialement vers l'extérieur du pneumatique par une bande de roulement 6. Ainsi, la zone de renfort de sommet 10 est radialement agencée entre la bande de roulement 6 et la nappe de carcasse 2. La nappe de carcasse 2 s'étend d'un bourrelet 5 à l'autre, en passant par les flancs 3 et le sommet 4.

Le sommet 4 est, à l'exception de la zone de renfort de sommet 10, dépourvu de toute nappe renforcée par des éléments de renfort filaires agencés sensiblement parallèlement les uns aux autres et noyés dans une matrice de composition de caoutchouc. Les éléments de renfort filaires de telles nappes renforcées exclues du sommet 4 du pneumatique 1 comprennent les éléments de renfort filaires métalliques et les éléments de renfort filaires textiles. En l'espèce, le sommet 4 est constitué par la zone de renfort de sommet 10 et la bande de roulement 6.

Le pneumatique 1 est, radialement entre la nappe de carcasse 2 et le sommet 4, dépourvu de toute nappe renforcée par des éléments de renfort filaires agencés sensiblement parallèlement les uns aux autres et noyés dans une matrice de composition de caoutchouc. Les éléments de renfort filaires de telles nappes renforcées exclues d'entre la nappe de carcasse 2 et le sommet 4 comprennent les éléments de renfort filaires métalliques et les éléments de renfort filaires textiles.

La zone de renfort de sommet 10 comprend une pluralité de bandelettes 14 de renfort disposées sur au moins une nappe de bandelette 12 de bandelettes. Les bandelettes 14 de chaque nappe 12 de bandelettes sont disposées de manière juxtaposées axialement. En l'espèce, la zone de renfort de sommet 10 comprend au moins deux nappes de bandelettes, une première nappe de bandelettes radialement à l'intérieur et une deuxième nappe de bandelettes radialement à l'extérieur. Chaque bandelette 14 forme un angle inférieur ou égal à 10° avec la direction circonférentielle Z, de préférence un angle inférieur ou égal à 5° avec la direction circonférentielle Z et ici très préférentiellement sensiblement nul avec la direction circonférentielle Z.

Chaque nappe 12 de bandelettes 14 est noyée dans une matrice 13 de composition de caoutchouc qui présente, à l'état réticulé, un module sécant en extension à 10% d'allongement supérieur ou égal à 10 MPa et de préférence inférieur ou égal à 30 MPa et plus préférentiellement inférieur ou égal à 20 MPa et ici égal à 12MPa.

En l'espèce, la matrice 13 de composition de caoutchouc utilisée ici, est une composition de haute rigidité typiquement du type pour nappes de sommet de pneumatique, à base de caoutchouc naturel, de noir de carbone (environ 75 pce), , d'antioxydant, d'un système de vulcanisation à fort taux de soufre (environ 7 pce) et des additifs usuels de vulcanisation. L'adhésion entre les bandelettes 14 et la matrice 13 de composition de caoutchouc est assurée par une colle du type RFL qui a été déposée de manière connue sur les bandelettes 14.

Dans le mode de réalisation de la figure 3A, les bandelettes 14 de chaque nappe de bandelettes 14 sont agencées avec un décalage axial de chacune des deux nappes 12 de bandelettes 14 d'environ une demi-largeur de la bandelette. Un tel agencement a pour effet de recouvrir les ponts de composition de caoutchouc de la première nappe par les bandelettes constituant la deuxième nappe de bandelettes. Les ponts de composition de caoutchouc entre les bandelettes de la première nappe de bandelettes sont ainsi positionnés sensiblement au milieu des largeurs respectives des bandelettes de la nappe de bandelettes adjacente. Dans cet exemple, la nappe de bandelettes radialement extérieure comporte un enroulement de moins de façon à compenser l'effet du décalage latéral. Dans une nappe 12 de bandelettes, le positionnement des bandelettes 14 en quinconce est réalisé par exemple par un premier trancanage débutant à un azimut donné, et un second trancanage avec un pas identique débutant à 180 degrés. En variante, le positionnement des bandelettes 14 est réalisé par un premier trancanage dans une direction axiale donnée, suivi d'un second trancanage dans la direction axiale opposée.

Chaque bandelette 14 présente une largeur axiale égale à 15 mm et le pont de gomme séparant deux bandelettes adjacentes axialement d'une même nappe de bandelettes est ici égal à 1 mm. L'espace dans la direction radiale (ou épaisseur) entre deux nappes de bandelettes successives occupée par la matrice 13 de composition de caoutchouc est de préférence comprise entre 0,05 et 2 mm, plus préférentiellement entre 0,1 et 1 mm. Par exemple, des épaisseurs de 0,2 à 0,8 mm se sont révélées tout à fait convenir pour le renforcement d'un pneumatique. L'épaisseur de matrice 13 de composition de caoutchouc entre les deux nappes de bandelettes 12 est ici de 0,2 mm, cette épaisseur relativement faible permettant un excellent couplage entre les nappes de bandelettes grâce à la valeur modérée du module sécant en extension à 10% d'allongement MA10 de la matrice 13 de composition de caoutchouc.

Le recouvrement moyen entre les bandelettes 14 des première et deuxième nappes 12 de bandelettes est supérieur ou égal à 20%, de préférence à 40% et inférieur ou égal à 80%, de préférence à 60% et ici égal à 46%.

La zone de renfort de sommet 10 est, à l'exception des nappes 12 de bandelettes 14 noyées dans la matrice 13 de composition de caoutchouc, dépourvue de toute nappe renforcée par des éléments de renfort filaires agencés sensiblement parallèlement les uns aux autres et noyés dans une matrice de composition de caoutchouc. Les éléments de renfort filaires de telles nappes renforcées exclues de la zone de renfort de sommet 10 du pneumatique 1 comprennent les éléments de renfort filaires métalliques et les éléments de renfort filaires textiles. En l'espèce, la zone de renfort de sommet 10 est constituée par les nappes 12 de bandelettes 14 noyées dans la matrice 13 de composition de caoutchouc.

Chaque bandelette 14 de renfort des nappes de bandelettes 14 est constituée par un stratifié 16 constitué d'au moins 3 couches composites 17. En l'espèce, le stratifié 17 est constitué de n≥1 couche(s) composite(s) intérieure(s) 17a et de m≥1 couches composites extérieures 17b, 17c, la ou les couches composites intérieures 17a étant encadrées radialement de part et d'autre respectivement par une ou plusieurs couches composites extérieures 17b et une ou plusieurs couches composites extérieures 17c.

Avantageusement, n va de 1 à 20, de préférence de 1 à 12 et plus préférentiellement de 1 à 6 et ici n=6. Avantageusement, m va de 1 à 8, de préférence de 1 à 4 et plus préférentiellement m=1 ou 2 et ici m=2.

Ici, les n couches composites intérieures 17a sont juxtaposées radialement les unes aux autres et les m couches composites extérieures 17b, 17c sont, de chaque côté des couches composites intérieures 17a, juxtaposées radialement les unes aux autres.

Chaque couche composite intérieure 17a comprend des fibres orientées 15 parallèles entre elles dont l'angle avec la direction circonférentielle Z est, en valeur absolue, inférieur ou égal à 10°, de préférence , inférieur ou égal à 5°, et ici sensiblement nul.

Chaque couche composite extérieure 17b, 17c comprend des fibres orientées respectivement 15', 15" parallèles entre elles dont l'angle avec la direction circonférentielle Z est, en valeur absolue, strictement supérieur à 10° et va de préférence entre 30° et 60° et ici égal à, en valeur absolue, 45°. Dans ce mode de réalisation, l'angle des fibres orientées 15', 15" de deux couches composites extérieures 17b, 17c disposées symétriquement de chaque côté des couches composites intérieures 17a est identique. Dans un autre mode de réalisation non illustré mais présentant les mêmes performances mécaniques, de bruit et de facilité de mise en oeuvre lors du procédé de fabrication du pneumatique, l'angle des fibres orientées 15', 15" de deux couches composites extérieures 17b, 17c disposées symétriquement de chaque côté des couches composites intérieures 17a est identique en valeur absolue mais de signe opposé.

En l'espèce, les fibres orientées 15' de la couche composite extérieure 17b1 radialement à l'intérieur présentent un angle égal à +45°. Les fibres orientées 15' de la couche composite extérieure 17b2 radialement à l'extérieur et au contact des couches composites intérieures 17a, présentent un angle égal à -45°. Les fibres orientées 15" de la couche composite extérieure 17c1 radialement à l'intérieur et au contact des couches composites intérieures 17a, présentent un angle égal à -45°. Les fibres orientées 15" de la couche composite extérieure 17c2 radialement à l'extérieur présentent un angle égal à +45°.

La valeur absolue du rapport de chaque angle formé par les fibres orientées 15', 15" de chaque couche composite extérieure 17b, 17c du stratifié 16 sur l'angle formé par les fibres orientées 15', 15" de chaque autre couche composite extérieure 17b, 17c du stratifié 16 va de 0,8 à 1,2, de préférence de 0,9 à 1,1 et, plus préférentiellement est ici égal à 1.

En outre, la somme des angles formés avec la direction circonférentielle par les fibres orientées 15', 15" des couches composites extérieures 17b et 17c du stratifié 16 est égale à 0°.

Par ailleurs, la somme des angles formés avec la direction circonférentielle Z par les fibres orientées 15' de toutes les couches composites extérieures 17b disposées radialement d'un même côté des couches composites intérieures 17a du stratifié 16, ici 0, est égale en valeur, et même ici en valeur absolue, à la somme des angles formés avec la direction circonférentielle Z par les fibres orientées 15" de toutes les couches composites extérieures 17c disposées radialement de l'autre côté du plan médian P du stratifié 16, ici également 0.

Les fibres orientées 15 de chaque couche composite intérieure 17a sont à bas module et présentent un module en extension inférieur ou égal à 30 GPa alors que les fibres orientées 15', 15" de chaque couche composite extérieure 17b, 17c sont à haut module et présentent un module en extension supérieur ou égal à 55 GPa. Les fibres orientées 15, 15', 15" sont enrobées d'une matrice polymérique.

Les bandelettes 14 composites peuvent être réalisées à partir de couches composites préimprégnées NTPT ThinPreg 450^{™} ou NTPT ThinPreg 402^{™} qui peuvent être obtenues notamment en l'application du procédé décrit dans le document WO 2016/198171.

Les couches composites pré-imprégnées sont déposées crues ou non polymérisées selon les angles souhaités de stratification et forment une laize d'une largeur supérieure à celle des bandelettes. La laize stratifiée est découpée en bandelette crue ou non polymérisée de largeur souhaitée. Les bandelettes crues sont trancannées sur un tambour de grand diamètre (ie 2 mètre de diamètre). Les bandelettes sont cuites sous vide (-850mBar) et sous pression (5 bars) à l'aide des périphériques de cuisson usuels (tels que tissu d'arrachage, feutre de drainage, film anti-adhésif micro-perforé ou non, film à vide etc.). Selon un autre mode de réalisation la laize stratifiée est déposée sur un tambour de grand diamètre et cuite sous vide (-850mBar) et sous pression (5 bars) à l'aide des périphériques de cuisson usuels. Après cuisson, la laize est découpée en bandelettes. De préférence, les bandelettes présentent une épaisseur inférieure ou égale à 1 mm, et plus préférentiellement inférieure ou égale à 0,7 mm.

La matrice polymérique de chaque couche composite du stratifié 16 comprend un polymère thermodurcissable ou un polymère thermoplastique, utilisé seul respectivement ou en coupage avec d'autres polymères. Préférentiellement la matrice polymérique peut être choisie parmi les résines thermodurcissables de type polyépoxides, polyester insaturés, vinylester, cyanate ester, bismalémimides, les polyuréthanes et un coupage de ces résines, ou bien parmi les résines thermoplastiques comme les polyesters (PET, PBT, PEN, PBN), les polyamides (nylon, aramide), les polyimides, les polyethersulfones, les polyphénylènesulfone, les polycétones (PK, PEEK). Conviennent particulièrement parmi les résines précitées, les résines thermodurcissables ayant une température de transition vitreuse supérieure ou égale à 160°C et les résines thermoplastiques ayant une température de fusion supérieure ou égale à 180°C. Notons que des charges renforçantes (silice, noir de carbone), ou des charges thermoplastiques (Orgasol de chez Arkema) ou des charges élastomèriques (Kane Ace de chez Kaneka) pourront être ajoutées aux résines ci-dessus. En l'espèce, la matrice polymérique utilisée est une matrice polymérique thermodurcissable constituée par une résine polyépoxide commercialisée par la société NTPT sous le nom commercial « ThinPreg 402^{™} ».

Conviennent particulièrement à l'invention des couches composites possédant une masse surfacique d'environ 200g/m² et une épaisseur avant cuisson d'environ 0,2 mm.

De préférence, on utilise des couches plus fines ayant une masse surfacique inférieure ou égale à 80g/m², plus préférentiellement cette masse allant de 18 g/m² à 80g/m², et une épaisseur avant cuisson inférieure à 0,06 mm.

L'homme de l'art saura adapter le nombre de couches composites selon la masse surfacique de ces couches composites.

Les fibres orientées à bas module 15 de chaque couche composite intérieure 17a sont choisies parmi les fibres de polyester, les fibres de cellulose, les fibres de polyamide aliphatique et les mélanges de ces fibres. Les fibres orientées à bas module 15 de chaque couche composite intérieure 17a comprennent des fibres en polyéthylène téréphtalate référencées 755 - 220 tex chez DuraFiberTech présentant un module en extension égal à 10 GPa. De façon préférentielle, les fibres orientées en polyéthylène téréphtalate sont majoritaires, c'est-à-dire représentent plus de 50 % des fibres d'une même couche composite intérieure 17a. Plus préférentiellement encore, les fibres orientées 15 de chaque couche composite intérieure sont constituées par des fibres en polyéthylène téréphtalate. Le ratio volumique matrice polymérique/fibres orientées 15 de chaque couche composite intérieure 17a va de 25/75 à 55/45 et ici égal à 50/50.

Les fibres orientées à haut module 15', 15" de chaque couche composite extérieure 17b, 17c sont choisies parmi les fibres de verre, les fibres de carbone, les fibres de polyamide ou copolyamide aromatique, les fibres de basalte, les fibres de quartz et les mélanges de ces fibres. Les fibres orientées à haut module 15', 15" comprennent ici des fibres de carbone référencées HS40 chez Mitsubishi présentant un module en extension égal à 455 GPa. De façon préférentielle, les fibres de carbone sont majoritaires, c'est-à-dire représente plus de 50 % des fibres d'une même couche composite extérieure 17b, 17c. Plus préférentiellement encore ici, les fibres orientées de chaque couche composite extérieure 17b, 17c du stratifié 16 sont constitués par des fibres de carbone. Le ratio volumique matrice polymérique/fibres de chaque couche composite extérieure 17b, 17c va de 30/70 à 90/10, et ici est environ 50/50.

Dans d'autres variantes possibles, les fibres orientées 15', 15" à haut module comprennent des fibres de verre. De façon préférentielle, les fibres de verre sont majoritaires, c'est-à-dire représentent plus de 50 % des fibres d'une même couche composite extérieure 17b, 17c. Plus préférentiellement encore, les fibres de chaque couche composite extérieure 17b, 17c du stratifié 16 sont constitués par des fibres de verre. Dans ces variantes, le ratio volumique matrice polymérique/fibres de chaque couche composite de stratifié allant de 30/70 à 70/30, et étant préférentiellement d'environ 45/55.

Dans encore une autre variante, les fibres orientées 15', 15" à haut module comprennent des fibres aramide, des fibres de basalte ou des fibres de quartz.

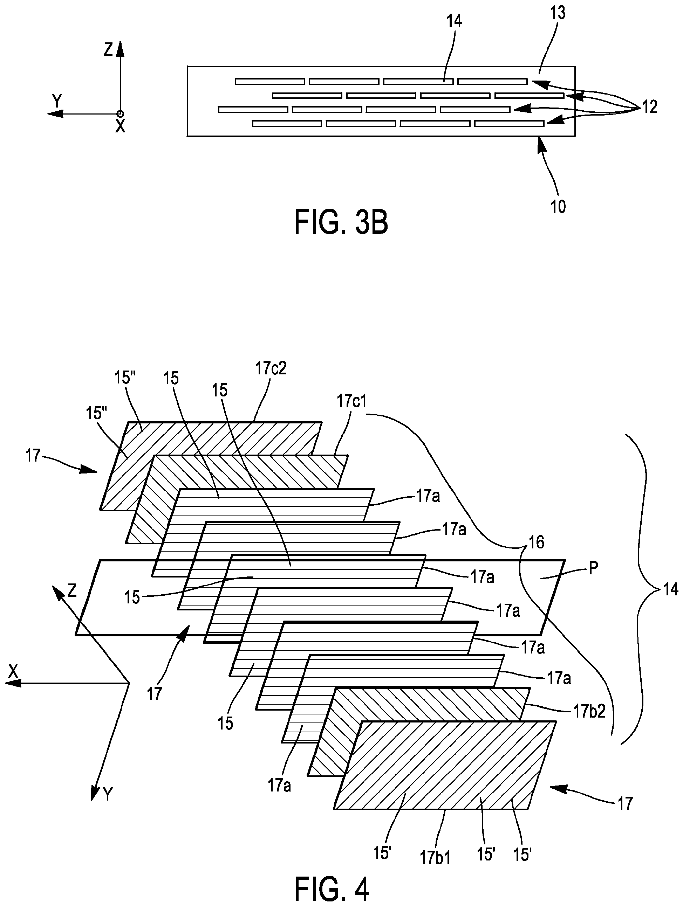

La figure 3B illustre un autre mode de réalisation d'une zone de renfort de sommet 10 d'un pneumatique selon l'invention. Selon ce mode de réalisation, la zone de renfort de sommet 10 est constituée par quatre nappes 12 de bandelettes 14 noyée dans une matrice 13 de composition de caoutchouc. Dans ce mode de réalisation, le recouvrement moyen entre les bandelettes de chaque nappe de bandelettes recouvrant les bandelettes de la nappe de bandelettes qui lui est radialement intérieure est supérieur ou égal à 20%, de préférence à 40% et inférieur ou égal à 80%, de préférence à 60%.

### TESTS COMPARATIFS

On a comparé le pneumatique 1 conforme à l'invention et décrit précédemment (désigné également sous la référence P1 dans ce qui suit), un pneumatique PT1 selon l'art antérieur WO2017/013575 (figure 8) comprenant des bandelettes BT1, ainsi que trois pneumatiques témoins PT2, PT3 et PT4 dont les caractéristiques sont décrites ci-dessous et comprenant respectivement des bandelettes BT2, BT3, BT4.

Les bandelettes du pneumatique PT1 selon l'art antérieur WO2017/013575 sont réalisées avec une matrice en PET (polyéthylène téréphtalate), dans laquelle sont intégrés des éléments de renforts filaires (aramide, retors constitués de 2 brins de 167 tex retordus ensemble avec une torsion de 315 t.m⁻¹) à 0°. Elles présentent une épaisseur de 0.5mm.

Le pneumatique PT2 est identique au pneumatique P1 à la différence que les fibres orientées 15 des couches composites intérieures 17a sont des fibres à haut module supérieur à 55 GPa, ici des fibres de verre haut module de type H commercialisé par la société Owens Corning présentant un module en extension égal à 80 GPa.

Le pneumatique PT3 est identique au pneumatique P1 à la différence que la zone de renfort de sommet du pneumatique PT3 comprend une nappe de frettage comprenant un élément filaire de renfort de frettage (aramide, retors constitués de 2 brins de 167 tex retordus ensemble avec une torsion de 315 t.m⁻¹) à 0° et à la différence que chaque stratifié 16 est constitué par 6 couches composites comprenant des fibres de verre haut module de type H commercialisé par la société Owens Corning, parallèles entre elles et formant un angle de -45° ou de +45° avec la direction circonférentielle, de sorte que les couches de composites sont telles qu'elles sont disposées deux par deux, radialement de part et d'autre du plan médian à égale distance de celui-ci de sorte que l'angle formé avec la direction circonférentielle par les fibres de la première des couches composites du couple de couches considérées qui est située d'un côté du plan médian est opposé à l'angle formé avec la direction circonférentielle par les fibres de la deuxième des couches composites du couple de couches considérées qui est située de l'autre côté du plan médian. Chaque stratifié 16 ne comprend pas de fibres à bas module, ni orientées avec un angle inférieur, en valeur absolue, à 10°.

Le pneumatique PT4 est identique au pneumatique P1 aux différences que les fibres orientées 15 des couches composites intérieures 17a sont des fibres à haut module supérieur à 55 GPa, ici des fibres de verre haut module de type H commercialisé par la société Owens Corning et que les fibres 15', 15" des couches composites extérieures 17b, 17c sont des fibres à bas module inférieur à 30 GPa, ici des fibres de PET référence 755 - 220 tex de chez DuraFiberTech présentant un module en extension égal à 10 GPa.

### Masse du pneumatique

Le pneumatique est pesé à l'aide d'une balance.

On attribue arbitrairement un indice de 100 pour la masse d'un pneumatique témoin. Un indice inférieur à 100 pour les pneumatiques comparés au pneumatique témoin indique que les pneumatiques comparés ont une masse inférieure au pneumatique témoin, ce qui est très favorable pour la performance de résistance au roulement.

### Rigidité de dérive

Pour la mesure de la poussée de dérive, chaque pneumatique a été monté sur une roue de dimension adaptée et gonflé à 2,4 bars. On le fait rouler à une vitesse de 80 km/h sur une machine automatique appropriée (machine type « sol-plan » commercialisée par la société MTS) On fait varier la charge notée « Z » , sous un angle de dérive de 1 degré, et on mesure de manière connue la rigidité ou poussée de dérive notée « D » (corrigée de la poussée à dérive nulle), en enregistrant à l'aide de capteurs l'effort transversal sur la roue en fonction de cette charge Z ; la poussée de dérive est la pente à l'origine de la courbe D(Z). On attribue arbitrairement un indice de 100 au pneumatique témoin. Un indice supérieur à 100 pour les pneumatiques comparés au pneumatique témoin indique que les pneumatiques comparés ont une rigidité de dérive améliorée par rapport au pneumatique témoin.

### Bruit généré

Le bruit dit « Coast By » est représentatif du désagrément acoustique que subit un riverain au passage d'un véhicule à vitesse constante sur un sol de granulométrie intermédiaire, type autoroutier : on fait passer un véhicule, à une vitesse donnée, boîte de vitesse au point mort et moteur coupé, sur une aire de mesure normalisée (norme ISO DIS 10 844) ; des microphones enregistrent les niveaux de bruit en dB(A).

### Conformabilité

La conformabilité est évaluée en mesurant la force nécessaire pour permettre les déformations radiale et circonférentielle nécessaires au moulage du pneumatique dans son moule de cuisson. Le pneumatique PT1 est noté '='. Plus la force est élevée, moins le pneumatique est conformable (note '-' ou '- - '). Plus la force est faible, plus le pneumatique est conformable (note '+' ou '++).

### Frettage

Afin d'estimer la capacité de frettage, on calcule les rigidités d'extension des bandelettes selon la direction circonférentielle. Plus cette rigidité d'extension est élevée et supérieure à 100 (valeur de la rigidité d'extension de la bandelette BT1), meilleur sera le frettage du pneumatique. A l'inverse, plus cette rigidité d'extension est faible et inférieure à 100, moins bon sera le frettage du pneumatique.

Le tableau 1 qui suit rassemble l'ensemble des résultats permettant de comparer la masse, la rigidité de dérive, le bruit généré, la facilité de mettre en oeuvre le procédé de fabrication du pneumatique (conformabilité).

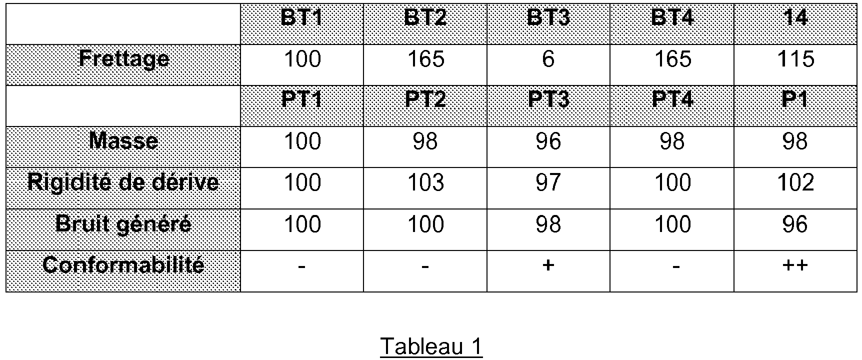

On constate que le pneumatique P1 conforme à l'invention présente des performances en extension et en cisaillement améliorées par rapport aux pneumatiques PT1, améliorations montrées par les résultats en frettage et en rigidité de dérive.

De plus, grâce à l'utilisation d'éléments de renfort formant un angle inférieur ou égal à 10° avec la direction circonférentielle à bas module, les pneumatiques PT3 et P1 génèrent peu de bruit par rapport aux pneumatiques PT1, PT2 et PT4 dans lesquels les éléments de renfort formant un angle inférieur ou égal à 10° avec la direction circonférentielle sont à haut module. Les différences observées de 2 et 4 points sur l'indice de performance du bruit généré sont significatives.

Enfin, grâce à l'utilisation d'éléments de renfort sous la forme de couches composites intérieures dont les fibres orientées forment un angle inférieur ou égal à 10° avec la direction circonférentielle, le frettage conféré par les bandelettes 14 du pneumatique P1 est meilleur que celui conféré par les bandelettes BT1 du pneumatiques PT1 et largement supérieur à celui conféré par les bandelettes BT3 du pneumatique PT3 qui nécessite l'utilisation d'une nappe de frettage supplémentaire.

## Revendications

1. Pneumatique (1) comprenant une nappe de carcasse (2) reliant deux bourrelets (5) par l'intermédiaire de deux flancs (3), ladite nappe de carcasse (2) étant surmontée radialement vers l'extérieur du pneumatique par une zone de renfort de sommet (10) et elle-même surmontée radialement vers l'extérieur du pneumatique par une bande de roulement (6), la zone de renfort de sommet (10) comprenant une pluralité de bandelettes (14) de renfort disposées sur au moins une nappe de bandelette, lesdites bandelettes (14) de chaque nappe (12) de bandelettes (14) étant disposées de manière juxtaposées axialement et formant chacune un angle inférieur ou égal à 10° avec la direction circonférentielle (Z), direction qui correspond à la périphérie du pneumatique et qui est définie par la direction de roulement du pneumatique, **caractérisé en ce que** chaque bandelette (14) de renfort est constituée par un stratifié constitué par :
- n≥1 couche(s) composite(s) intérieure(s) (17a), et dans le cas où n>1 ces couches composites intérieures (17a) étant juxtaposées radialement les unes aux autres, chaque couche composite intérieure (17a) comprenant des fibres orientées (15) parallèles entre elles dont l'angle avec la direction circonférentielle (Z) est, en valeur absolue, inférieur ou égal à 10°, les fibres orientées (15) de chaque couche composite intérieure (17a) présentant un module en extension inférieur ou égal à 30 GPa et étant enrobées d'une matrice polymérique, la ou les couches composites intérieures (17a) étant encadrées radialement de part et d'autre respectivement par m≥1 couches composites extérieures (17b, 17c), et dans le cas où m>1 ces m couches composites extérieures (17b, 17c) étant, de chaque côté de la ou des couches composites intérieures (17a), juxtaposées radialement les unes aux autres,
- chaque couche composite extérieure (17b, 17c) comprenant des fibres orientées (15', 15") parallèles entre elles dont l'angle avec la direction circonférentielle (Z) est, en valeur absolue, strictement supérieur à 10°, les fibres orientées (15', 15") de chaque couche composite extérieure (17b, 17c) présentant un module en extension supérieur ou égal à 55 GPa et étant enrobées d'une matrice polymérique.

2. Pneumatique (1) selon la revendication précédente, comprenant au moins deux nappes (12) de bandelettes (14), une première nappe de bandelettes radialement à l'intérieur et une deuxième nappe de bandelettes radialement à l'extérieur, lesdites bandelettes (14) de chaque première et deuxième nappe (12) de bandelettes étant disposées de manière juxtaposées axialement et formant chacune un angle inférieur ou égal à 10° avec la direction circonférentielle (Z).

3. Pneumatique (1) selon la revendication précédente, dans lequel le recouvrement moyen entre les bandelettes (14) des première et deuxième nappes (12) de bandelettes est supérieur ou égal à 20%, de préférence à 40%.

4. Pneumatique (1) selon la revendication 2 ou 3, dans lequel le recouvrement moyen entre les bandelettes (14) des première et deuxième nappes (12) de bandelettes est inférieur ou égal à 80%, de préférence à 60%.

5. Pneumatique (1) selon l'une quelconque des revendications précédentes, dans lequel chaque nappe (12) de bandelettes est noyée dans une matrice (13) de composition de caoutchouc qui présente, à l'état réticulé, un module sécant en extension à 10% d'allongement supérieur ou égal à 10 MPa.

6. Pneumatique (1) selon l'une quelconque des revendications précédentes, dans lequel l'angle formé par les fibres orientées (15) de chaque couche composite intérieure (17a) avec la direction circonférentielle (Z) est, en valeur absolue, inférieur ou égal à 5°, de préférence sensiblement nul.

7. Pneumatique (1) selon l'une quelconque des revendications précédentes, dans lequel l'angle formé par les fibres orientées (15', 15") de chaque couche composite extérieure (17b, 17c) avec la direction circonférentielle (Z) va, en valeur absolue de 30° à 60°.

8. Pneumatique (1) selon l'une quelconque des revendications précédentes, dans lequel n va de 1 à 20, de préférence de 1 à 12 et plus préférentiellement de 1 à 6.

9. Pneumatique (1) selon l'une quelconque des revendications précédentes, dans lequel m va de 1 à 8, de préférence de 1 à 4 et plus préférentiellement m=1 ou 2.

10. Pneumatique (1) selon l'une quelconque des revendications précédentes, dans lequel la somme des angles formés avec la direction circonférentielle (Z) par les fibres orientées (15', 15") de toutes les couches composites extérieures (17b, 17c) disposées radialement d'un même côté de la ou des couches composites intérieures (17a) de chaque stratifié est égale en valeur absolue à la somme des angles formés avec la direction circonférentielle (Z) par les fibres orientées de toutes les couches composites extérieures (17b, 17c) disposées radialement de l'autre côté du plan médian (P) dudit stratifié.

11. Pneumatique (1) selon l'une quelconque des revendications précédentes, dans lequel la somme des angles formés avec la direction circonférentielle (Z) par les fibres orientées (15', 15") des couches composites extérieures (17b, 17c) de chaque stratifié est égale à 0°.

12. Pneumatique (1) selon l'une quelconque des revendications 1 à 11, dans lequel l'angle des fibres orientées (15', 15") de deux couches composites extérieures (17b, 17c) disposées symétriquement de chaque côté de la ou des couches composites intérieures est identique.

13. Pneumatique (1) selon l'une quelconque des revendications 1 à 11, dans lequel l'angle des fibres orientées (15', 15") de deux couches composites extérieures (17b, 17c) disposées symétriquement de chaque côté de la ou des couches composites intérieures (17a) est identique en valeur absolue mais de signe opposé.

14. Pneumatique (1) selon l'une quelconque des revendications précédentes, dans lequel la valeur absolue du rapport de chaque angle formé par les fibres orientées (15', 15") d'une couche composite extérieure de chaque stratifié sur l'angle formé par les fibres orientées (15', 15") de chaque autre couche composite extérieure dudit stratifié va de 0,8 à 1,2, de préférence de 0,9 à 1,1 et plus préférentiellement est égal à 1.

15. Pneumatique (1) selon l'une quelconque des revendications précédentes, dans lequel la matrice polymérique de chaque couche composite (17a, 17b, 17c) de stratifié comprend un polymère thermodurcissable ou un polymère thermoplastique.

## Patentansprüche

1. Reifen (1) umfassend eine Karkassenlage (2), die zwei Wülste (5) mittels zweier Flanken (3) verbindet, wobei die Karkassenlage (2) radial zum Äußeren des Reifens hin von einem Scheitelverstärkungsbereich (10) überdeckt ist und selbst radial zum Äußeren des Reifens hin von einem Laufstreifen (6) überdeckt ist, wobei der Scheitelverstärkungsbereich (10) eine Mehrzahl von Verstärkungsstreifen (14) umfasst, die auf mindestens einer Streifenlage angeordnet sind, wobei die Streifen (14) jeder Lage (12) von Streifen (14) axial nebeneinander angeordnet sind und jeweils einen Winkel kleiner als oder gleich 10° zur Umfangsrichtung (Z) bilden, wobei die Richtung dem Umfang des Reifens entspricht und von der Laufrichtung des Reifens definiert ist, **dadurch gekennzeichnet, dass** jeder Verstärkungsstreifen (14) von einem Laminat gebildet ist, das von Folgendem gebildet ist:
- n ≥ 1 innere(n) Verbundschicht(en) (17a), und wobei in dem Fall, dass n > 1, diese inneren Verbundschichten (17a) radial nebeneinander angeordnet sind, wobei jede innere Verbundschicht (17a) orientierte Fasern (15) umfasst, die parallel zueinander verlaufen, deren Winkel zur Umfangsrichtung (Z) im Absolutwert kleiner als oder gleich 10° ist, wobei die orientierten Fasern (15) jeder inneren Verbundschicht (17a) einen Dehnungsmodul kleiner als oder gleich 30 GPa aufweisen und von einer Polymermatrix ummantelt sind, wobei die innere(n) Verbundschicht(en) (17a) radial beiderseits jeweils von m ≥ 1 äußeren Verbundschichten (17b, 17c) eingefasst sind, und wobei in dem Fall, dass m > 1, diese m äußeren Verbundschichten (17b, 17c) auf jeder Seite der inneren Verbundschichten (17a) radial nebeneinander angeordnet sind,
- wobei jede äußere Verbundschicht (17b, 17c) orientierte Fasern (15', 15") umfasst, die parallel zueinander verlaufen, deren Winkel zur Umfangsrichtung (Z) im Absolutwert streng größer als 10° ist, wobei die orientierten Fasern (15', 15") jeder äußeren Verbundschicht (17b, 17c) einen Dehnungsmodul größer als oder gleich 55 GPa aufweisen und von einer Polymermatrix ummantelt sind.

2. Reifen (1) nach dem vorhergehenden Anspruch, umfassend wenigstens zwei Lagen (12) von Streifen (14), eine erste Streifenlage radial innen und eine zweite Streifenlage radial außen, wobei die Streifen (14) jeder ersten und zweiten Streifenlage (12) axial nebeneinander angeordnet sind und jeweils einen Winkel kleiner als oder gleich 10° zur Umfangsrichtung (Z) bilden.

3. Reifen (1) nach dem vorhergehenden Anspruch, wobei die mittlere Überlappung zwischen den Streifen (14) der ersten und zweiten Streifenlage (12) größer als oder gleich 20 %, vorzugsweise größer als oder gleich 40 % ist.

4. Reifen (1) nach Anspruch 2 oder 3, wobei die mittlere Überlappung zwischen den Streifen (14) der ersten und zweiten Streifenlage (12) kleiner als oder gleich 80 %, vorzugsweise kleiner als oder gleich 60 % ist.

5. Reifen (1) nach einem der vorhergehenden Ansprüche, wobei jede Streifenlage (12) in eine Matrix (13) aus einer Gummizusammensetzung eingebettet ist, die im vernetzten Zustand einen Dehnungssekantenmodul bei 10 % Dehnung von größer als oder gleich 10 MPa aufweist.

6. Reifen (1) nach einem der vorhergehenden Ansprüche, wobei der Winkel, der von den orientierten Fasern (15) jeder inneren Verbundschicht (17a) zur Umfangsrichtung (Z) gebildet wird, im Absolutwert kleiner als oder gleich 5°, vorzugsweise im Wesentlichen null ist.

7. Reifen (1) nach einem der vorhergehenden Ansprüche, wobei der Winkel, der von den orientierten Fasern (15', 15") jeder äußeren Verbundschicht (17b, 17c) zur Umfangsrichtung (Z) gebildet wird, im Absolutwert von 30° bis 60° beträgt.

8. Reifen (1) nach einem der vorhergehenden Ansprüche, wobei n von 1 bis 20, vorzugsweise von 1 bis 12 und besser noch von 1 bis 6 beträgt.

9. Reifen (1) nach einem der vorhergehenden Ansprüche, wobei m von 1 bis 8, vorzugsweise von 1 bis 4 beträgt und besser noch m = 1 oder 2 ist.

10. Reifen (1) nach einem der vorhergehenden Ansprüche, wobei die Summe der Winkel, die zur Umfangsrichtung (Z) von den orientierten Fasern (15', 15") aller äußeren Verbundschichten (17b, 17c) gebildet werden, die radial auf ein und derselben Seite der inneren Verbundschicht(en) (17a) jedes Laminats angeordnet sind, im Absolutwert gleich der Summe der Winkel ist, die zur Umfangsrichtung (Z) von den orientierten Fasern aller äußeren Verbundschichten (17b, 17c) gebildet werden, die radial auf der anderen Seite der Mittelebene (P) des Laminats angeordnet sind.

11. Reifen (1) nach einem der vorhergehenden Ansprüche, wobei die Summe der Winkel, die zur Umfangsrichtung (Z) von den orientierten Fasern (15', 15") der äußeren Verbundschichten (17b, 17c) jedes Laminats gebildet werden, gleich 0° ist.

12. Reifen (1) nach einem der Ansprüche 1 bis 11, wobei der Winkel der orientierten Fasern (15', 15") zweier äußerer Verbundschichten (17b, 17c), die symmetrisch auf jeder Seite der inneren Verbundschicht(en) angeordnet sind, identisch ist.

13. Reifen (1) nach einem der Ansprüche 1 bis 11, wobei der Winkel der orientierten Fasern (15', 15") zweier äußerer Verbundschichten (17b, 17c), die symmetrisch auf jeder Seite der inneren Verbundschicht(en) (17a) angeordnet sind, im Absolutwert identisch ist, jedoch ein umgekehrtes Vorzeichen aufweist.

14. Reifen (1) nach einem der vorhergehenden Ansprüche, wobei der Absolutwert des Verhältnisses jedes Winkels, der von den orientierten Fasern (15', 15") einer äußeren Verbundschicht jedes Laminats gebildet wird, zum Winkel, der von den orientierten Fasern (15', 15") jeder anderen äußeren Verbundschicht des Laminats gebildet wird, von 0,8 bis 1,2, vorzugsweise von 0,9 bis 1,1 beträgt und besser noch gleich 1 ist.

15. Reifen (1) nach einem der vorhergehenden Ansprüche, wobei die Polymermatrix jeder Laminatverbundschicht (17a, 17b, 17c) ein duroplastisches Polymer oder ein thermoplastisches Polymer umfasst.

## Claims

1. Tyre (1) comprising a carcass ply (2) connecting two beads (5) via two sidewalls (3), said carcass ply (2) being surmounted radially towards the outside of the tyre by a crown reinforcing zone (10) which is itself surmounted radially towards the outside of the tyre by a tread (6), the crown reinforcing zone (10) comprising a plurality of reinforcing strips (14) arranged in at least one ply of strips, said strips (14) of each ply (12) of strips (14) being arranged so that they are juxtaposed axially and each forms an angle of less than or equal to 10° with the circumferential direction (Z), this direction corresponding to the periphery of the tyre and being defined by the direction of running of the tyre, **characterized in that** each reinforcing strip (14) is made up of a laminate consisting of:
- n≥1 inner composite layer or layers (17a), and, if n>1, these inner composite layers (17a) being juxtaposed radially with each other, each inner composite layer (17a) comprising oriented fibres (15) parallel to each other, the angle of which to the circumferential direction (Z) is less than or equal to 10° in absolute terms, the oriented fibres (15) of each inner composite layer (17a) having a modulus of extension of less than or equal to 30 GPa and being coated with a polymer matrix, the inner composite layer or layers (17a) being framed radially on either side, respectively, by m≥1 outer composite layers (17b, 17c), and, if m>1, these m outer composite layers (17b, 17c) being juxtaposed radially with each other on either side of the inner composite layer or layers (17a),
- each outer composite layer (17b, 17c) comprising oriented fibres (15', 15") parallel to each other, the angle of which with the circumferential direction is strictly greater than 10° in absolute terms, the oriented fibres (15', 15") of each outer composite layer (17b, 17c) having a modulus of extension greater than or equal to 55 GPa and being embedded in a polymer matrix.

2. Tyre (1) according to the preceding claim, comprising at least two plies (12) of strips (14), a first ply of strips radially on the inside and a second ply of strips radially on the outside, said strips (14) of each first and second ply (12) of strips being arranged so that they are juxtaposed axially and each forms an angle of less than or equal to 10° with the circumferential direction (Z).

3. Tyre (1) according to the preceding claim, wherein the mean overlap between the strips (14) of the first and second plies (12) of strips is greater than or equal to 20%, preferably greater than or equal to 40%.

4. Tyre (1) according to Claim 2 or 3, wherein the mean overlap between the strips (14) of the first and second plies (12) of strips is less than or equal to 80%, preferably less than or equal to 60%.

5. Tyre (1) according to any of the preceding claims, wherein each ply (12) of strips is embedded in a matrix (13) of rubber compound which, when cross-linked, has a secant extension modulus at 10% elongation greater than or equal to 10 MPa.

6. Tyre (1) according to any of the preceding claims, wherein the angle formed by the oriented fibres (15) of each inner composite layer (17a) with the circumferential direction (Z) is, in absolute terms, less than or equal to 5°, and preferably substantially zero.

7. Tyre (1) according to any of the preceding claims, wherein the angle formed by the oriented fibres (15', 15") of each outer composite layer (17b, 17c) with the circumferential direction (Z) ranges, in absolute terms, from 30° to 60°.

8. Tyre (1) according to any of the preceding claims, wherein n ranges from 1 to 20, preferably from 1 to 12, and more preferably from 1 to 6.

9. Tyre (1) according to any of the preceding claims, wherein m ranges from 1 to 8, or preferably from 1 to 4, and more preferably m=1 or 2.

10. Tyre (1) according to any of the preceding claims, wherein the sum of the angles formed with the circumferential direction (Z) by the oriented fibres (15', 15") of all the outer composite layers (17b, 17c) arranged radially on any one side of the inner composite layer or layers (17a) of each laminate is equal in absolute terms to the sum of the angles formed with the circumferential direction (Z) by the oriented fibres of all the outer composite layers (17b, 17c) arranged radially on the other side of the mid-plane (P) of said laminate.

11. Tyre (1) according to any of the preceding claims, wherein the sum of the angles formed with the circumferential direction (Z) by the oriented fibres (15', 15") of the outer composite layers (17b, 17c) of each laminate is equal to 0°.

12. Tyre (1) according to any of Claims 1 to 11, wherein the angle of the oriented fibres (15', 15") of two outer composite layers (17b, 17c) positioned symmetrically on each side of the inner composite layer or layers is identical.

13. Tyre (1) according to any of Claims 1 to 11, wherein the angle of the oriented fibres (15', 15") of two outer composite layers (17b, 17c) positioned symmetrically on each side of the inner composite layer or layers (17a) is identical in absolute terms but of opposite sign.

14. Tyre (1) according to any of the preceding claims, wherein the absolute value of the ratio of each angle formed by the oriented fibres (15', 15") of an outer composite layer of each laminate to the angle formed by the oriented fibres (15', 15") of each other outer composite layer of said laminate ranges from 0.8 to 1.2, or preferably from 0.9 to 1.1, and more preferably is equal to 1.

15. Tyre (1) according to any of the preceding claims, wherein the polymer matrix of each composite layer (17a, 17b, 17c) of laminate comprises a thermosetting polymer or a thermoplastic polymer.
